# EUROPÄISCHE PATENTANMELDUNG

(11) **EP 0 902 223 A1**
(43) Veröffentlichungstag der Anmeldung: **17.03.1999**
(21) Anmeldenummer: 98112811.9
(22) Anmeldetag: 10.07.1998
(51) Int. Cl.: F16K 31/363

(54) **Überströmventil**

(30) Priorität: 10.09.1997 DE 29716274 U
(71) Anmelder: LORENTZ, Bernt, D-22457 Hamburg (DE)
(72) Erfinder: LORENTZ, Bernt, D-22457 Hamburg (DE)
(74) Vertreter: Richter, Werdermann & Gerbaulet

(57) **Zusammenfassung**

Zum Betrieb von Pumpen oberhalb des jeweiligen Systemwiderstandes bei allen Volumenströmen ist bei einem federbelasteten, direkt wirkenden Überströmventil zur Begrenzung des Druckes in einem System, in dem eine Flüssigkeit von einer Verdrängerpumpe gefördert wird und mit wechselnden Durchflußraten durch das System strömt, das Ventilgehäuse (1) und der darin angeordnete Ventilkörper (22) mit dem Ventilkopf (14) so ausgebildet sind, daß der Ventilkopf nach dem Abheben von dem Ventilsitz (3) einen zweiten Wirkdurchmesser aufweist, der größer ist als der erste Wirkdurchmesser, wobei der Ventilkopf (11) mit größer werdendem Hub des Ventilkörpers (22) gleichzeitig einen sich vergrößernden Durchflußquerschnitt freigibt, wobei der Ventilkörper (22) in einem Teil als im Ventilgehäuse (1) gleitender Ventilkolben (11) mit einem dritten Wirkdurchmesser ausgebildet ist, der größer ist als der zweite Wirkdurchmesser, so daß die bei geöffnetem Ventil durch das Ventilgehäuse (1) strömende Flüssigkeit eine Druckdifferenz erzeugt, welche auf den Ventilkolben (11) gegen die Wirkung der ersten Feder (21) einwirkt.

## Beschreibung

Die vorliegende Erfindung bezieht sich auf das Gebiet der Ventiltechnik. Sie betrifft ein Überströmventil zur Begrenzung des Druckes in einem System, in welchem eine Flüssigkeit von einer Verdrängerpumpe gefördert und mit wechselnden Durchflußraten durch das System strömt, umfassend ein Ventilgehäuse mit einer von einem Ventilsitz berandeten Eintrittsöffnung für den Eintritt der Flüssigkeit in das Ventilgehäuse, und mit wenigstens einer mit dem Rücklauf zur Verdrängerpumpe in Verbindung stehenden Austrittsöffnung für den Austritt der Flüssigkeit aus dem Ventilgehäuse, sowie einen innerhalb des Ventilgehäuses verschiebbar angeordneten Ventilkörper mit einem Ventilkopf, wobei der Ventilkörper von einer ersten Feder mit dem Ventilkopf dichtend gegen den Ventilsitz gedrückt und bei einem durch einen ersten Wirkdurchmesser des Ventilkopfes bestimmten Öffnungsdruck der Flüssigkeit gegen die Kraft der ersten Feder von dem Ventilsitz abgehoben wird und die Eintrittsöffnung freigibt.

Zahlreiche Pumpsysteme mit Verdrängerpumpen zur Förderung von Flüssigkeiten werden mit unterschiedlichen Durchflußraten von der Nenn- bzw. maximalen Leistung über verschiedene Drosselzustände bis hin zur Durchflußrate Null betrieben. Zur Vermeidung von Überlastung des Antriebes, zur Begrenzung des Systemdruckes und zur Begrenzung des Volumenstroms werden direkt wirkende federbelastete Druckbegrenzungsventile bzw. Überströmventile eingesetzt.

Diese Ventile haben nach Öffnungsbeginn aufgrund der mit dem Öffnungshub steigenden Federkräfte einen ebenfalls ansteigenden Überströmdruck zur Folge. Dem wird in bekannten Ausführungsformen nach Öffnungsbeginn der Ventile durch dann wirksam werdende größere Ventilflächen entgegengewirkt und damit der Druckanstieg reduziert oder auch eine Druckabsenkung erreicht. Schwierigkeiten bereitet hierbei die Stabilisierung des Druckes bei jedem Betriebszustand. Bekannt ist, daß zur Stabilisierung hydraulische Dämpfungszylinder eingesetzt werden, die dann allerdings bei schlagartigen Widerstandsänderungen im System, z.B. Absperrvorgänge, eine schnelle Ventilreaktion verhindern und dadurch unerwünschte Druckspitzen verursachen.

Beispielhaft kann zum besseren Verständnis der Probleme der sehr verbreitete Betrieb von Zapfsäulen zur Betankung von Fahrzeugen herangezogen werden. Mit der Entnahme des Zapfventils aus der Halterung wird das Pumpaggregat in Betrieb gesetzt und der Kraftstoff fließt mit geringfügig über dem Betankungsdruck liegenden Druck über das Überströmventil, wobei die dabei erforderliche Antriebsenergie in etwa dem Energiebedarf bei der Betankung entspricht. Dieser Zustand dauert unterschiedlich lange.

Während der Betankung mit voll geöffnetem Zapfventil, d.h. mit maximalem Volumenstrom und Betriebsdruck und Verwendung einer Zapfsäulenpumpe, die recht genau für diese Leistung ausgelegt ist, ergeben sich keine Probleme. Sehr häufig werden jedoch im Volumenstrom überdimensionierte Pumpen verwendet, um während des Betriebes bereits eine Teilöffnung des Überströmventils zu bewirken. Durch diese Maßnahme sollen die durch schnell schließende Zapfventile ausgelösten Druckspitzen reduziert werden. Das hat einen höheren Energieverbrauch zur Folge.

An den Zapfventilen sind weiterhin für den Öffnungshebel in der Regel zwei Raststellen zur gedrosselten Betankung vorgesehen. Hierbei wird die Pumpe in Verbindung mit den verwandten Überströmventilen, mit maximalem Druck betrieben. Dieser Druck erfährt aufgrund des gedrosselten Volumenstroms einen relativ geringen Druckabfall, so daß vor dem Zapfventil ein unnötig hoher Druck herrscht. Trotz geringerer Betankungsrate, jedoch mit nahezu unverändertem Pumpendruck, ist hierbei der Energieverbrauch gegenüber der ungedrosselten Betankung unverändert und damit unnötig hoch.

Außerdem erfordert bei den gedrosselten Betankungsvorgängen der am Zapfventil anliegende hohe Druck sehr kleine Drosselquerschnitte. Dieses hat im Zapfventil hohe Durchflußgeschwindigkeiten zur Folge, die sich im Kraftfahrzeugtank durch Schaumbildung und stärkere Ausgasung nachteilig auswirken.

Bei Beendigung der Betankung durch manuelle oder automatische Absperrung des Zapfventils wiederholt sich druck- und damit energiemäßig der gleiche Zustand wie vor Beginn der eigentlichen Betankung und hält an, bis das Zapfventil wieder in die Zapfsäule eingehängt wird. Statistische Untersuchungen an Zapfsäulen haben ergeben, daß die Pumpbetriebszeit vor und nach der eigentlichen Betankung ca. 30% der gesamten Pumpbetriebszeit ausmacht, d.h. ein großes Potential an nutzlos verbrauchter Energie darstellen.

Ein weiteres beispielhaftes Anwendungsgebiet aus einem großen Anwendungsbereich sich Heizungspumpen, die mit Flüssigkeit als Wärmeträger zum Wärmetransport, sehr oft zu verschiedenen Verbrauchern, z.B. Heizkörper, eingesetzt werden. Der Wärmebedarf ist aus verschiedenen Gründen variabel und wird den Verbrauchern, z.B. durch Thermostatventile und/ oder für das gesamte System durch Regelung der Pumpendrehzahl angepaßt. Bei Anpassung des Wärmebedarfs, z.B. nur über Thermostatventile steigt mit zunehmender Drosselung bei den üblicherweise im Heizungsbereich verwendeten Zentrifugalpumpen der Druck an, und es treten wegen der dann großen Druckdifferenzen an den Ventilen unerwünschte Geräusche auf. Der Energieverbrauch wird bei Zentrifugalpumpen mit zunehmender Drosselung geringer.

Zur Reduzierung des Druckes und des Energieverbrauchs werden drehzahl/frequenzgeregelte Pumpenantriebe verwendet. Ein Teil der eingesparten Antriebsenergie geht hierbei allerdings durch die Frequenzregelung wieder verloren. Die Verwendung von Verdrängerpumpen mit gegenüber Zentrifugalpumpen erheblich höheren Wirkungsgraden und einer Druck/Volumenstrom-Förderkennlienie nahezu entlang der Druck/Volumenstrom-Widerstandskennlinie des Systems wäre funktions- und energietechnisch eine erhebliche Verbesserung gegenüber dem Stand der Technik.

Durch die DE-U-72 23 233 ist ein Entlastungs- bzw. Überdruckventil, insbesondere für Spritzpistolen bekannt, das aus einem hohen Ventilgehäuse mit einem Einlaß und einem Auslaß, die mit einem inneren Arbeitsraum in dem Ventilgehäuse verbunden sind, aus einem in dem Arbeitsraum gleitend geführten Kolben, wobei das Ventilgehäuse einen Ventilschlitz aufweist, dessen Querschnitt kleiner ist als der Querschnitt des Kolbens und der den Einlaß umgibt, wobei der Kolben einen Abschnitt von kleinerem Durchmesser aufweist, der mit dem Ventilsitz zusammenarbeitet, um das Hindurchströmen eines Fluides durch das Ventilgehäuse zu unterbrechen, wobei das Ventilgehäuse einen Kanal aufweist, der den Raum zwischen dem Ventilsitz und dem Kolben dann, wenn der Kolben von dem Ventilsitz abgehoben ist, mit den Auslaß des Ventilgehäuses verbindet, aus einer verstellbaren Einrichtung zum Variieren des Durchtrittsquerschnittes des Kanals, aus einer zwischen dem Kolben und einem Widerlager in dem Ventilgehäuse angeordneten Feder zum Aufbringen einer Schließkraft auf den Kolben und aus einer Einrichtung besteht, die es ermöglicht, die durch die Feder aufgebrachte Kraft einzustellen, um die durch die Feder auf den Kolben ausgeübte Schließkraft einzustellen und so die Druckkraft zu variieren, die in dem Einlaß zur Wirkung kommen muß, um den Kolben von dem Ventilsitz abzuheben. Damit soll ein unter Federspannung stehendes Entlastungsventil geschaffen werden, das so ausgebildet ist, daß es den Betriebsdruck der Pumpenanlage schnell herabsetzt, sobald der Betrieb der Spritzpistole unterbrochen wird. Dieses bekannte Ventil hat einen zweiten größeren Wirkdurchmesser. Nach dem Abheben des Ventiltellers vom Ventilsitz bei Überschreiten des durch die Feder bestimmten Öffnungsdrucks wird der geringere Überströmdruck durch den Kolben bestimmt. Da dieses allein, zu einem instabilen Zustand des Ventilkolbens und damit des Überströmventils führt, wird die überströmende Flüssigkeit über einen zweiten einstellbaren Ventilquerschnitt zum Auslaß geführt. Für jeden Betriebszustand, bestimmt durch den Volumenstrom der Pumpe und dem erforderlichen Betriebsdruck für die Spritzpistole, muß zur Vermeidung von Instabilität des Druckes beim Überströmen eine aufeinander abgestimmte Einstellung der Feder und des zweiten Ventilquerschnitts erfolgen. Das Ventil ist also zum Überströmen mit stabilem Druck nur bei einer konstant eingestellten Betriebsbedingung und auch nur bei Unterbrechung (vollständige Absperrung) des Fluidstroms geeignet. Eine Stabilität des abgesenkten Druckes und Anpassung der Größenordnung der Absenkung an variable gedrosselte Betriebszustände ist mit dieser Ventilausführung nicht erreichbar.

Ein federbelastetes Druckregelventil mit einem Tauchkolben und einer Überlaufleitung ist durch die DE-A-886 990 bekannt. Dieses Druckregelventil wird von einem Tauchkolben gesteuert, der auch eine Überlaufleitung steuert, und ist besonders geeignet für Masutbrenner. In dem Mantel des Tauchkolbens oder in dem Führungszylinder des Tauchkolbens sind eine oder mehrere Nuten angebracht, die sich wenigstens angenähert in der Richtung der Achse des Tauchkolbens erstrecken und einen veränderlichen Querschnitt haben, der an ihrem der Rückflußöffnung der Flüssigkeit zu dem Vorratsbehälter am nächsten liegenden Ende am kleinsten und an ihrem anderen Ende am größten ist, so daß diese dem Überlauf dienenden Nuten einen Durchlaß mit allmählich veränderlichem Querschnitt für den in den Vorratsbehälter zurückkehrenden Teil der Flüssigkeit herstellen. Dieses Ventil hat mit dem Tauchkolben, dessen Außendurchmesser gleich dem Winkeldurchmesser des Ventilsitzes ist, in Verbindung mit der Bohrung, bei entsprechender Dimensionierung derselben, einen dämpfenden Effekt der durch die langhubigen Querschnittsvergrößerung durch die Nuten verstärkt wird. Der Überströmdruck ist nicht abfallend, sondern vielmehr entsprechend der Federcharakteristik ansteigend.

Durch die DE 680 573 ist ein Überströmventil für Drehkolbenflüssigkeitspumpen mit einem federbelasteten Absperrkolben bekannt. Der Absperrkolben weist über seinem Ventilsitz eine, die wirksame Ventilsitzfläche vergrößernde Kreisringfläche auf, wobei der Absperrkolben in einem austauschbaren, zylindrischen Ringkörper mit bei steigendem Kolbenhub sich stark vergrößernden Durchtrittsöffnungen geführt ist, wobei der die Kreisringfläche beeinflussende Staudruck durch ein weiteres an sich bekanntes Drosselorgan noch zusätzlich beeinflußt wird. Dieses Ventil hat einen zweiten größeren Wirkdurchmesser, einen zweiten hubabhängigen variablen und einen außerhalb angeordneten dritten einstellbaren Ventilquerschnitt. Durch diese Anordnung soll der bei herkömmlichen Überströmventilen gegebene erhebliche Druckanstieg nach Öffnungsbeginn beseitigt werden. Eine Druckabsenkung bei allen Volumenströmen durch das Überströmventil, bis in die Nähe der Systemkennlinie ist mit dieser Ventilausführung weder beabsichtigt, noch erreichbar.

Es ist Aufgabe der Erfindung ein federbelastetes und direkt wirkendes Überströmventil der eingangs genannten Art zu schaffen, welches erlaubt, die Pumpe bei allen Volumenströmen druckmäßig nur geringfügig oberhalb des jeweiligen Systemwiderstandes zu betreiben und den jeweils erforderlichen Druck stabil zu halten.

Hierdurch sollen neben der energiesparenden Betriebsweise auch andere funktionelle Vorteile erreicht werden.

Diese Aufgabe wird durch die im Patentanspruch 1 angegebenen Merkmale gelöst.

Hiernach ist das Überströmventil derart ausgebildet, daß das Ventilgehäuse und der darin angeordnete Ventilkörper mit dem Ventilkopf so ausgestaltet sind, daß der Ventilkopf nach dem Abheben von dem Ventilsitz einen zweiten Wirkdurchmesser aufweist, der größer ist als der erste Wirkdurchmesser. Der Ventilkopf gibt mit größer werdendem Hub des Ventilkörpers gleichzeitig einen sich vergrößernden Durchflußquerschnitt frei, wobei der Ventilkörper einen im Ventilgehäuse gleitenden Ventilkolben mit einem dritten Wirkdurchmesser umfaßt, der größer ist als der zweite Wirkdurchmesser. Bei geöffnetem Ventil wird die durch das Ventilgehäuse strömende Flüssigkeit vor Eintritt in den Rücklauf gedrosselt, wobei eine Druckdifferenz erzeugt wird, welche auf den Ventilkolben gegen die Wirkung der ersten Feder einwirkt.

Ein derart ausgebildetes Überströmventil hat folgende Vorteile:

Bei einem Einsatz an einer Zapfsäule wäre der Energieverbrauch mit diesem Überströmventil während der Zeit, in welcher beim Betanken der Kraftstoff mit geringfügig über dem Betankungsdruck liegenden Druck über das Überströmventil fließt, um mehr als die Hälfte geringer.

Wie bereits eingangs erwähnt, werden sehr häufig im Volumenstrom überdimensionierte Pumpen verwendet, um während des Betriebes bereits eine Teilöffnung des Überströmventils zu bewirken. Durch diese Maßnahme sollen die durch schnell schließende Zapfventile ausgelösten Druckspitzen reduziert werden. Das hat einen höheren Energieverbrauch zur Folge. Bei einem erfindungsgemäßen Überströmventil erübrigt sich diese energieverbrauchende Maßnahme.

Bei einer herkömmlichen Zapfsäule ist bei gedrosselter Betankung der Energieverbrauch gegenüber der ungedrosselten Betankung praktisch unverändert. Bei einem erfindungsgemäßen Überströmventil erfolgt bei diesen gedrosselten Betankungsvorgängen durch die Druckabsenkung eine Energieeinsparung.

Bei einer herkömmlichen Zapfsäule haben sehr kleine Drosselquerschnitte im Zapfventil hohe Durchflußgeschwindigkeiten zur Folge, die sich im Kraftfahrzeugtank durch Schaumbildung und stärkere Ausgasung nachteilig auswirken. Ein erfindungsgemäßes Überströmventil erlaubt größere Drosselquerschnitte am Zapfventil mit dann geringeren Durchströmgeschwindigkeiten und hierdurch die Vermeidung der vorgenannten Nachteile.

Nach einer ersten manuellen oder automatischen Absperrung des Zapfventils am Ende einer Betankung erfolgt häufig ein durch manuelles Drosseln dosiertes Nachtanken, wobei ein erfindungsgemäßes Überströmventil den Druck absenkt und damit energiesparend ist. Hierbei ist der abgesenkte Druck bei gedrosselter Betankung von weiterem praktischen Vorteil, da eine kontrollierte und die Gefahr des Überlaufens reduzierende Nachbetankung möglich ist und die geringere Druckdifferenz am gedrosselten Zapfventil außerdem geringere Austrittsgeschwindigkeiten zur Folge hat und dadurch die nachteilige Schaumbildung und verstärkte Ausgasung im Kraftstofftank reduziert bzw. beseitigt wird.

Die weltweit eingesetzten Zapfventile, und das sind nur einige Fabrikate, gehen bei der Festlegung der Raststellen für die gedrosselte Betankung von Überströmventilen mit in etwa konstantem und im Bereich des maximalen Betriebsdrucks liegenden Überströmdruck aus. Daher muß bei einer Kombination dieser unveränderten Zapfventile mit erfindungsgemäßen Überströmventilen während der gedrosselten Betankung eine geringere und erst bei Beendigung der Betankung die volle Druckabsenkung erfolgen. Die Überströmcharakteristik des erfindungsgemäßen Überströmventils kann an diese Forderung angepaßt werden.

Bei Heizungssystemen läßt sich mit einem erfindungsgemäßen Überströmventil in Kombination mit einer Verdrängerpumpe mit verhältnismäßig geringem Aufwand und ohne drehzahlgeregelten Antrieb eine systemangepaßte Druck/Volumenstrom-Förderkennlinie herstellen. Bei Anlagen mit einem höheren Volumenstrom und großem zu regelnden Volumenstrombereich ist die Kombination des erfindungsgemäßen Überströmventils mit einem drehzahlgeregelten Antrieb, eine die Einsatzmöglichkeiten erheblich erweiternde Ausführung, die Funktions- und energietechnisch ebenfalls eine erhebliche Verbesserung gegenüber dem Stand der Technik darstellt.

Eine erste bevorzugte Ausführungsform des erfindungsgemäßen Überströmventils ist dadurch gekennzeichnet, daß der Ventilsitz als nach innen gerichteter ringförmiger Ventilsitz ausgebildet ist, daß der Ventilkopf mit einem Ventilteller, der im Durchmesser größer ist als der Ventilsitz, dichtend auf den Ventilsitz drückt, und daß das Ventilgehäuse im Hubbereich des Ventiltellers mit einem sich in Hubrichtung vergrößernden Innendurchmesser ausgebildet ist. Hierdurch wird eine besonders günstige Kennlinie des Ventils hinsichtlich des Druckes und des Volumenstromes erreicht.

Eine zweite bevorzugte Ausführungsform des erfindungsgemäßen Überströmventils ist dadurch gekennzeichnet, daß der Ventilkopf mit einer in Durchflußrichtung vor dem Ventilsitz angeordneten, als Drosselnase wirkenden Verlängerung versehen ist, welche im ersten Teil des Öffnungshubes einen nur geringen und sich erweiternden Durchflußquerschnitt freigibt. Durch die Verlängerung werden Druck und Volumenstrom, auch bei sehr kleinem Volumenstrom durch das Ventil, beim Öffnen des Ventils stabil gehalten.

Gemäß einer weiteren bevorzugten Ausführungsform des Überströmventils nach der Erfindung schließt der Ventilkolben mit der dem Ventilkopf abgewandten Seite innerhalb des Ventilgehäuses einen mit dem Ventilhub veränderlichen Zylinderraum ab, der durch einen ersten Verbindungskanal kleinen Querschnitts mit dem Rücklauf in Verbindung steht. Hierdurch werden größere Schwingungen des Ventilkolbens wirkungsvoll hydraulisch gedämpft.

Eine weitere bevorzugte Ausführungsform des erfindungsgemäßen Überströmventils ist dadurch gekennzeichnet, daß der Ventilkörper mehrstückig ausgebildet ist und neben dem Ventilkopf einen separaten, im Ventilgehäuse gleitenden Ventilkolben umfaßt, daß die erste Feder den Ventilkolben beaufschlagt, daß der Ventilkopf und Ventilkolben in Hubrichtung relativ zueinander beweglich, im geschlossenen Zustand des Ventils voneinander beabstandet und gegeneinander durch eine zweite Feder verspannt sind, und daß die beiden Federn so ausgelegt sind, daß der Öffnungsdruck zum Öffnen des Ventils gegen den Druck der zweiten Feder gleich oder größer ist, als der Öffnungsdruck zum Öffnen des Ventils gegen den Druck der ersten Feder. Hierdurch können wirkungsvoll kurze Druckspitzen im hydraulischen System unschädlich gemacht werden.

Weitere vorteilhafte Ausgestaltungen der Erfindung sind Gegenstand der Unteransprüche.

Nachstehend wird die Erfindung anhand der beigefügten Zeichnungen näher erläutert. Diese zeigen in
- Fig. 1: einen Längsschnitt einer ersten bevorzugten Ausführungsform eines Überströmventils nach der Erfindung mit einstückigem Ventilkörper,
- Fig. 2: einen Querschnitt durch das Ventil nach Fig. 1 in Höhe der Austrittsöffnungen,
- Fig. 3: in einer zu Fig. 1 vergleichbaren Darstellung eine zweite bevorzugte Ausführungsform eines Überströmventils mit zweiteiligem, federgekoppelten Ventilkörper zur Unschädlichmachung von Druckspritzen, und
- Fig. 4: ein Vergleich von Kennlinien (Druck P in bar über Volumenstrom Q in 1/min) eines herkömmlichen Überströmventils (A, A1, A2) und eines Überströmventils nach der Erfindung (B, B1, B2 und C der Widerstandskennlinie eines Systems).

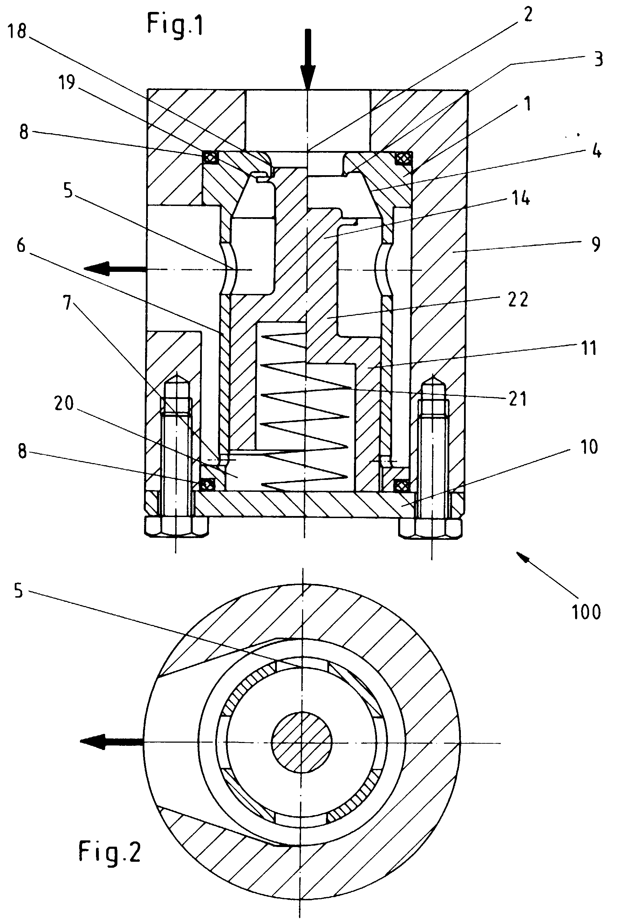

Das erfindungsgemäße Überströmventil 100 ist in der Fig. 1 in einer vorzugsweisen Ausführungsform als Einbaueinheit dargestellt. Das Ventilgehäuse 1 mit einer druckseitigen Eintrittsöffnung 2, einem Ventilsitz 3, einer kegelförmigen Ausdrehung 4, zur Niederdruckseite bzw. dem Rücklauf führenden Austrittsöffnungen bzw. -bohrungen 5, einer Zylinderbohrung 6, einem Verbindungskanal 7 zwischen einem Zylinderraum 20 und der Niederdruckseite ist mit O-Ringen 8 dichtend in ein Gehäuse 9 mit einem Abschlußdeckel 10 eingebaut.

In dem Ventilgehäuse 1 ist beweglich ein Ventilkörper 22 gelagert, der einen Ventilkopf 14 und einen Ventilkolben 11 umfaßt. Der Ventilkolben 11 ist leichtgängig in der Zylinderbohrung 6 eingefaßt, wird durch eine erste Feder 21 gegen mit dem Ventilkopf 14 gegen den Ventilsitz 3 gedrückt. Der Ventilkopf 14 hat an der Anlagefläche zum Ventilsitz 3 einen deutlich größeren Ventilteller 19 und eine in die Eintrittsöffnung 2 hinein ragende Verlängerung 18 in Form einer Drosselanlage, die nach Beginn der Öffnungsbewegung anfänglich nur einen geringen und dann sich erweiternden Durchtrittsquerschnitt freigibt.

Bei Überschreiten des durch die erste Feder 21 vorgegebenen Differenzdruckes an der Wirkfläche des Ventilsitzes 3 beginnt das Überströmventil 100 zu öffnen. Durch die Verlängerung 18 werden Druck und Volumenstrom, auch bei sehr kleinem Volumenstrom, durch das Ventil stabil gehalten, da Schwingungen des Ventilkolbens 11 nur zu sehr geringen Änderungen des Durchtrittsquerschnittes führen. Größere Schwingungen des Ventilkolbens 11 werden durch den mit dem Ventilgehäuse 1 gebildeten Zylinderraum 20 in Zusammenwirken mit den kleinen Querschnitt der Verbindung 7 hydraulisch gedämpft.

Mit zunehmender Öffnung des Ventils und bei dann ansteigendem Volumenstrom durch das Ventil wird progressiv der Ventilteller 19 in Verbindung mit der Ausdrehung 4 als Öffnungskraft wirksam und damit nicht nur der Kraftanstieg der ersten Feder 21 kompensiert, sondern auch eine Druckabsenkung bewirkt. Bei einem weiterem Anstieg der Überströmmenge bis hin zur vollen Absperrung des Stroms im System wird durch die Austrittsöffnungen5, die gemäß Fig. 2 am Umfang des Ventilgehäuses 1 verteilt angeordnet sind, eine steigende Druckdifferenz erzeugt, die über die große Fläche des Ventilkolbens 11 diesen bis zum Anschlag gegen den Abschlußdeckel 10 bewegt.

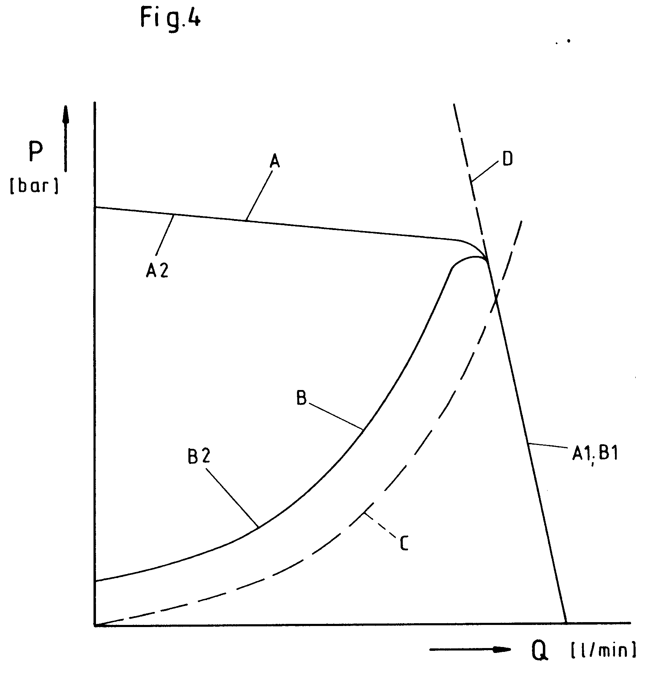

Hierdurch wird gemäß Fig. 4 eine Ventilkennlinie B erzeugt, die in einem ersten Abschnitt B1 gleich ist wie die Kennlinie A bzw. A1 eines herkömmlichen Ventils und entlang der Pumpenkennlinie D verläuft, die aber nach Öffnung des Ventils in einem zweiten Abschnitt B2 im Unterschied zum nahezu waagerechten Kennlinienabschnitt A2 eines herkömmlichen Ventils stark abfällt und damit oberhalb und parallel zu der Kennlinie C des Systemwiderstand verläuft. Der erste Teil der abfallenden Druckkurve B2 wird dabei primär durch den Ventilteller 19 in Verbindung mit der Ausdrehung 4 bewirkt, der zweite Teil primär durch die von der Druckdifferenz auf den Ventilkolben 11 erzeugte Stellkraft.

Die maßliche Abstimmung von Durchmesser des Ventiltellers 19, der Kontur der Ausdrehung 4, den Austrittsöffnungen 5 und dem Durchmesser des Ventilkolbens 11 in der Zylinderbohrung 6 zum Durchmesser des Ventilsitzes 3 ermöglicht mit sehr geringem Aufwand die weitgehendste Anpassung der Überströmkurve Druck P/Volumenstrom Q an anwendungsspezifische Anforderungen und damit einen optimal energieeffizienten Betrieb.

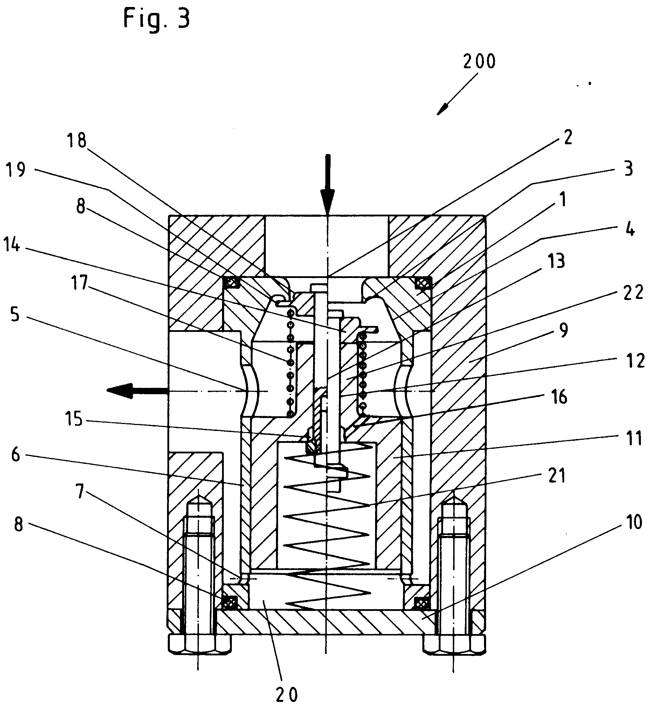

In Fig. 3 ist in einem weiteren Ausführungsbeispiel ein Überströmventil 200 unter Beibehaltung der vorgenannten Funktionsmerkmale mit einem zweiteiligen Ventilkörper 22 zur Reduzierung von Druckspitzen bei schnellen Absperrvorgängen und bei schnellen Anfahrvorgängen gegen ein abgesperrtes System dargestellt. Gleiche Teile haben dabei die gleichen Bezugszeichen wie in Fig. 1.

Der Ventilkolben 11 nimmt hier in einer zentralen Bohrung 12 leichtgängig eingepaßt eine Führungsstange 13 für den Ventilkopf 14 mit der Verlängerung 18 und dem Ventilteller 19 auf. Das andere Ende der Führungsstange 13 hat einen Dichtkegel15, der durch eine zweite Feder 17 einen Verbindungskanal 16 der beiden Federräume abdichtet. Die Vorspannkraft der zweiten Feder 17 entspricht einem Differenzdruck p1 und die erste Feder einem Differenzdruck p2, beide bezogen auf den Wirkdurchmesser des Ventilsitzes 3. Der Druck p2 wird nach anlagespezifischen Anforderungen festgelegt und der Druck p1 wird höher ausgelegt.

Bei einem schnellen Absperr- oder Anfahrvorgang wird der Druck p1 überschritten, und die mit geringer Masse ausgeführte Kombination aus Ventilkopf 14 und Führungsstange 13 öffnet ungedämpft sehr schnell und maximal bis zum Anschlag gegen den Ventilkolben 11. Unmittelbar nach dem Öffnungsbeginn wird der Verbindungskanal 16 geöffnet, um damit eine schädliche Dämpfung der Hubbewegung durch das Verdrängungsvolumen der Führungsstange 13 zu vermeiden.

Durch die mit steigendem Durchfluß zunehmend wirksam werdende Fläche des Ventiltellers 19 erfolgt eine kraftverstärkende und damit beschleunigte Wirkung auf den Öffnungshub. Durch die Öffnung des Verbindungskanals 16 wird die hydraulische Dämpfung der Ventilkolbenbewegung durch den Verbindungskanal 7 weitestgehend aufgehoben und damit wird auch der Ventilkolben 11 während der schnellen Öffnung des Ventilkopfes 14 zumindest geringfügig mit bewegt, was zu einer weiteren Reduzierung der Druckspitze beiträgt.

Unmittelbar nach dem Abbau der Druckspitze wird der Ventilkopf 14 durch die zweite Feder 17 wieder in seine Endlage gedrückt und der Verbindungskanal 16 durch den Dichtkegel 15 geschlossen. Damit ist der Ventilkolben 11 wieder starr mit dem Ventilkopf 14 verbunden und entspricht funktionell der Ausführung gemäß Fig.1.

Die hydraulische Dämpfung und damit Stabilisierung des beweglichen Ventilkörpers 22 in beliebiger Zwischenstellung ist nur optimal wirksam, wenn der Kolbenraum der zweiten Feder 21 frei von gasförmigen Einschlüssen ist. Bei dem vorzugsweise vertikalen Einbau des Ventils und bei der Inbetriebnahme eines nicht flüssigkeitsgefüllten Systems erfolgt die Entlüftung des Kolbenraums automatisch mit den ersten schnellen Anfahr- bzw. Absperrvorgängen über den Verbindungskanal 16. Der maximale Hub der Kombination 13/14 wird so dimensioniert, daß die volle Pumpleistung selbst bei nicht bewegtem Ventilkolben 11 mit zulässigem Druck überströmen kann.

### BEZUGSZEICHENLISTE

- 100, 200: Überströmventil
- 1: Ventilgehäuse
- 2: Eintrittsöffnung (Ventilgehäuse)
- 3: Ventilsitz
- 4: Ausdrehung (kegelförmig)
- 5: Austrittsöffnung (Ventilgehäuse)
- 6: Zylinderbohrung
- 7: Verbindungskanal
- 8: O-Ring
- 9: Gehäuse
- 10: Abschlußdeckel
- 11: Ventilkolben
- 12: Bohrung (Ventilkolben)
- 13: Führungsstange
- 14: Ventilkopf
- 15: Dichtkegel
- 16: Verbindungskanal
- 17: Feder
- 18: Verlängerung (Ventilkopf)
- 19: Ventilteller (Ventilkopf)
- 20: Zylinderraum
- 21: Feder
- 22: Ventilkörper

## Patentansprüche

1. Überströmventil (100, 200) zur Begrenzung des Druckes in einem System, in welchem eine Flüssigkeit von einer Verdrängerpumpe gefördert und mit wechselnden Durchflußraten durch das System strömt, umfassend ein Ventilgehäuse (1) mit einer von einem Ventilsitz (3) berandeten Eintrittsöffnung für den Eintritt der Flüssigkeit in das Ventilgehäuse (1), und mit wenigstens einer mit dem Rücklauf zur Verdrängerpumpe in Verbindung stehenden Austrittsöffnungen (5) für den Austritt der Flüssigkeit aus dem Ventilgehäuse (1), sowie einen innerhalb des Ventilgehäuses (1) verschiebbar angeordneten Ventilkörper (22) mit einem Ventilkopf (14), welcher Ventilkörper (22) von einer ersten Feder (21) mit einem Ventilkörper (14) dichtend gegen den Ventilsitz (3) gedrückt wird, und bei einem durch einen ersten Wirkdurchmesser des Ventilkopfes (14) bestimmten Öffnungsdruck der Flüssigkeit gegen die Kraft der ersten Feder (21) von dem Ventilsitz (3) abgehoben wird und die Eintrittsöffnung (2) freigibt,
dadurch gekennzeichnet,
daß das Ventilgehäuse (1) und der darin angeordnete Ventilkörper (22) mit dem Ventilkopf (14) so ausgebildet sind, daß der Ventilkopf nach dem Abheben von dem Ventilsitz (3) einen zweiten Wirkdurchmesser aufweist, welcher größer ist als der erste Wirkdurchmesser, und der Ventilkopf (11) mit größer werdendem Hub des Ventilkörpers (22) gleichzeitig einen sich vergrößernden Durchflußquerschnitt freigibt, daß der Ventilkörper (22) in einem Teil als im Ventilgehäuse (1) gleitender Ventilkolben (11) mit einem dritten Wirkdurchmesser ausge-bildet ist, welcher größer ist als der zweite Wirkdurchmesser, und daß die bei geöffnetem Ventil durch das Ventilgehäuse (1) strömende Flüssigkeit eine Druckdifferenz erzeugt, welche auf den Ventilkolben (11) gegen die Wirkung der ersten Feder (21) einwirkt.

2. Überströmventil nach Anspruch 1,
dadurch gekennzeichnet,
daß der Ventilsitz (3) als nach innen gerichteter ringförmiger Ventilsitz ausgebildet ist, daß der Ventilkopf (14) mit einem Ventilteller (19), der im Durchmesser größer ist als der Ventilsitz (3), dichtend auf den Ventilsitz (3) drückt, und daß das Ventilgehäuse (1) im Hubbereich des Ventiltellers (19) mit einem sich in Hubrichtung vergrößernden Innendurchmesser ausgebildet ist.

3. Überströmventil nach einem der Ansprüche 1 und 2,
dadurch gekennzeichnet,
daß der Ventilkopf (14) mit einer in Durchflußrichtung vor dem Ventilsitz (3) angeordneten, als Drosselnase wirkenden Verlängerung (18) versehen ist, welche im ersten Teil des Öffnungshubes einen nur geringen und sich erweiternden Druchflußquerschnitt freigibt.

4. Überströmventil nach Anspruch 1,
dadurch gekennzeichnet,
daß der Ventilkolben (11) mit der dem Ventilkopf (14) abgewandten Seite innerhalb des Ventilgehäuses (1) einen mit dem Ventilhub veränderlichen Zylinderraum (20) abschließt, der durch einen ersten Verbindungskanal kleinen Querschnitts mit dem Rücklauf in Verbindung steht.

5. Überströmventil nach Anspruch 1,
dadurch gekennzeichnet,
daß die Drosselung des Flüssigkeitsstromes durch die wenigstens eine Austrittsöffnung (5) erfolgt, welche als Bohrung zwischen dem Ventilkopf (14) und dem Ventilkolben (11) im Ventilgehäuse (1) angeordnet ist.

6. Überströmventil nach einem der Ansprüche 1 bis 5,
dadurch gekennzeichnet,
daß der Ventilkörper (22) einstückig ausgebildet ist.

7. Überströmventil nach einem der Ansprüche 1 bis 5,
dadurch gekennzeichnet,
daß der Ventilkörper (22) mehrstückig ausgebildet ist und neben dem Ventilkopf (14) einen separaten, im Ventilgehäuse (1) gleitenden Ventilkolben (11) umfaßt, daß die erste Feder (21) den Ventilkolben (11) beaufschlagt, und daß der Ventilkopf (14) und Ventilkolben (11) in Hubrichtung relativ zueinander beweglich, im geschlossenen Zustand des Ventils voneinander beabstandet und gegeneinander durch eine zweite Feder (17) verspannt sind.

8. Überströmventil nach Anspruch 7,
dadurch gekennzeichnet,
daß die beiden Federn (17, 21) so ausgelegt sind, daß der Öffnungsdruck zum Öffnen des Ventils gegen den Druck der zweiten Feder (17) gleich oder größer ist, als der Öffnungsdruck zum Öffnen des Ventils gegen den Druck der ersten Feder (21).

9. Überströmventil nach Anspruch 8,
dadurch gekennzeichnet,
daß der Ventilkolben (11) mit der dem Ventilkopf (14) abgewandten Seite innerhalb des Ventilgehäuses (1) einen mit dem Ventilhub veränderlichen Zylinderraum (20) abschließt, und daß Mittel (12, 13, 15, 16) vorgesehen sind, durch welche bei relativer Bewegung des Ventilkopfes (14) zum Ventilkolben (11) eine Verbindung (16) zwischen dem Zylinderraum (20) und dem Rücklauf freigegeben wird.
